# EUROPÄISCHE PATENTSCHRIFT

(11) **EP 0 351 599 B1**
(45) Veröffentlichungstag und Bekanntmachung des Hinweises auf die Patenterteilung: **05.01.1994**
(21) Anmeldenummer: 89111771.5
(22) Anmeldetag: 28.06.1989
(51) Int. Cl.: A23L 3/04, A23L 3/00

(54) **Vorrichtung zum kontinuierlichen Sterilisieren von in Behältern befindlichen Lebensmitteln**
Apparatus for the continuous sterilisation of food, when stored in a container
Appareil de stérilisation continue pour aliments en boîte

(30) Priorität: 01.07.1988 YU 1283/88
(43) Veröffentlichungstag der Anmeldung: 24.01.1990
(73) Patentinhaber: SOUR GAVRILOVIC Prehrambena Industrija, 44250 Petrinja (YU)
(72) Erfinder: Skobic, Davor, 41000 Zagreb (YU); Kolin, Ivo, Dr., 41000 Zagreb (YU)
(74) Vertreter: Lewald, Dietrich, Dipl.-Ing.

(56) Entgegenhaltungen:
- WO-A-88/08943
- DE-C- 745 426
- FR-A- 608 275
- FR-A- 1 377 481
- FR-A- 2 020 434
- GB-A- 390 768
- GB-A- 927 203
- NL-A- 8 202 255
- US-A- 2 695 555
- US-A- 2 760 873
- US-A- 2 794 385
- US-A- 4 196 225

## Beschreibung

Die Erfindung betrifft eine Vorrichtung zum kontinuierlichen Sterilisieren von in Behältern befindlichen Lebensmitteln, der horizontalen Bauart, mit Kammern für Erwärmung, Sterilisieren und Abkühlen, wobei die Kammern durch auf- und abfahrbare Trenntüren voneinander getrennt sind.

Eine solche Vorrichtung ist durch CH-PS 406 810 bekannt, die zwar horizontal bauenden Typ ist, bei der allerdings ein Konserventransport durch die Vorrichtung nicht möglich ist, ein Druckausgleich, da Wasserstrahltransport angewendet wird, nicht gegeben ist und dort immer mit dem gleichen Wasser gearbeitet werden muß und eine dort als Druckausgleich bezeichnete Konstruktion ihre Funktion nicht erfüllen kann. Auch wird dort mit Vakuum gearbeitet, das sterilisierende Medium würde bei Realisierung herausgesaugt. Würde man die bekannte Vorrichtung realisieren, so wäre diese sowieso nur für die Sterilisierung von Behältern aus dünner Aluminium- oder Kunststoffolie geeignet.

Bei einer bekannten vertikal bauenden Vorrichtung (DE-AS 16 17 987) wird der entsprechende Wasserdampfdruck in getrennten Kolonnen durch hydrostatischen Wasserdruck erhalten, die Beaufschlagung wird mehrmals wiederholt. Wasser und Wasserdampf haben aber unterschiedliche Wärmeübergangszahlen. Dies macht die Vorrichtung weniger sicher und von der technischen Seite her komplizierter. Beim Durchgang von Lebensmitteln durch vertikale Kolonnen wird der Druck zudem völlig abhängig von der Wassersäulenhöhe ständig geändert.

Der Erfindung liegt demgegenüber die Aufgabe zugrunde, eine Vorrichtung der eingangs genannten Art so weiterzubilden, daß sich ein gleichmäßigeres Produkt ergibt und eine Sterilisation direkt mit Dampf ebenso wie Druckerhöhungsschwankungen vermieden werden.

Erreicht wird dies erfindungsgemäß überraschend durch Sicherung eines dauernd aufrechtzuerhaltenden konstanten Betriebsdrucks durch erhöht angeordnete hydrostatische Kammern und Durchführung des sterilisierenden Erwärmens ausschließlich in unter Druck stehendem heißem Wasser.

Bei der Horizontalvorrichtung gemäß der Erfindung befinden sich die Lebensmittel in ihren Behältern immer im Wasser und immer unter dem gleichen Druck, der sich mit Hilfe der hydrostatischen Gefäße konstant einstellt. Somit ist das Wärmeübertragungsmedium immer nur Wasser, was zu einem gleichmäßgen Wärmeübergang im Verlauf des Sterilisationsprozesses führt.

Um mit der Sterilisierung die Mikroorganismen, beispielsweise Clostridium Botulinum, zu vernichten, d.h. ausgesprochene "Nahrungsmittelgiftmörder", werden die Lebensmittel der Erhitzung bei einer Wassertemperatur bis 120°C unterworfen, was einem Druck von ca. 2 bar entspricht.

Ist andererseits die Konserve nach der Sterilisierung nicht genug abgekühlt, kann sie sich deformieren, öffnen oder kann, wenn Druckschwankungen auftreten, brechen. Häufig tritt dies bei Sterilisiervorrichtungen, besonders in der Übergangsphase von der Erhitzung zur Abkühlung ein, wobei es sehr schwer ist, den konstanten Druck zu regulieren.

Durch die Maßnahme nach der Erfindung werden diese Schwankungen einerseits, Druckveränderungen während des Prozesses andererseits, vermieden, weil die erhöht angeordneten hydrostatischen Gefäße immer den gleichen Druck in der kontinuierlich arbeitenden Horizontalvorrichtung aufrecht erhalten.

Gegenüber diesem bekannten Stand der Technik wird durch die Vorrichtung nach der Erfindung wesentlich weniger Wasser benötigt, zwei verhältnismäßig dünne Rohre liefern den konstanten Druck (2 bar) mit Hilfe der entsprechend (20 m) hoch angeordneten hydrostatischen Gefäße. Es sind nur horizontale Transportbänder und diese sehr kurzer Bauart erforderlich. Deren Energieverbrauch ist gering. Sie sind nur kurzzeitig im Betrieb, wenn die Lebensmittelchargen von der einen zur anderen Kammer überführt werden. Es gibt immer nur ein Wärmeübergangsmedium, nämlich Wasser, folglich hat man es immer nur mit ein und der gleichen Wärmeübergangszahl zu tun; der technologische Prozeß ist ausgeglichen, die Ausführung vereinfacht.

Durch die Maßnahme nach der Erfindung wird auch jede Wartezeit vermieden, weil das kontinuierliche Verfahren schneller abgewickelt werden kann, da alle drei Phasen, nämlich Vorbereitung, Sterilisierung und Abkühlung gleichzeitig in drei nachgeschalteten Kammern ablaufen.

Weiterhin treten in die Horizontalvorrichtung gemäß der Erfindung bereits hermetisch verschlossene Gefäße mit Lebensmitteln ein, so daß keine zusätzliche Verseuchungsgefahr heraufbeschworen wird. Außerdem ist der Lineartransport bedeutend einfacher, verglichen mit dem Spiralteller begrenzter Kapazität, der wechselweise, zunächst in Abfüllrichtung und dann in Entleerungsrichtung rotiert.

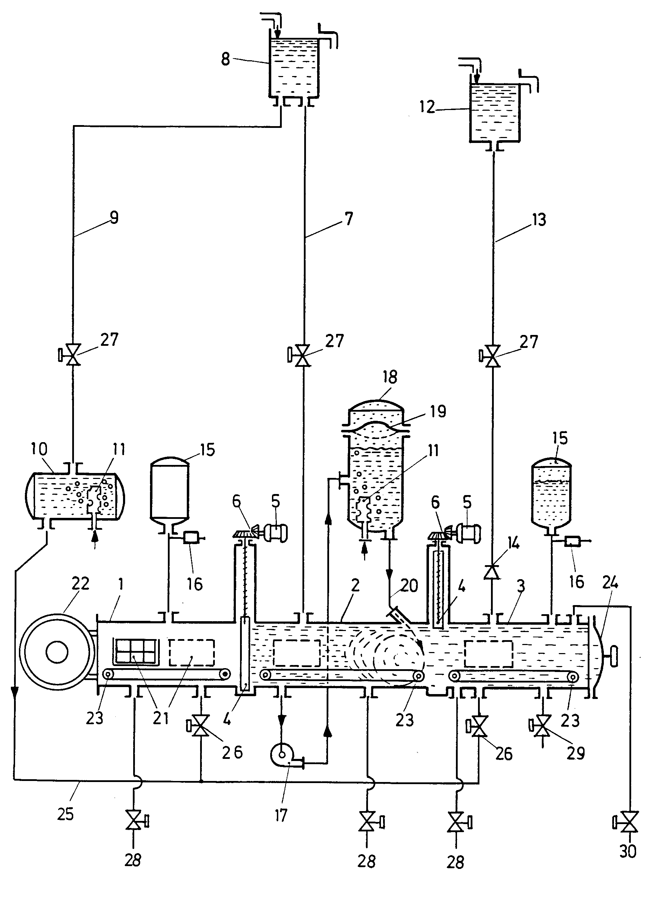

Eine beispielsweise Ausführungsform der Erfindung, die deren Prinzip deutlich werden läßt, soll nun mit Bezug auf die beiliegende Zeichnung naher erläutert werden. Diese stellt einen Vertikalschnitt durch eine Ausführungsform der Horizontalvorrichtung für kontinuierliche Lebensmittelsterilisierung dar.

Im kontinuierlichen Sterilisierungsprozeß, der laufend in den Kammern 1, 2 und 3 abläuft, befinden sich gleichzeitig drei verschiedene Lebensmittelchargen von denen die erste sich in der Vorbereitungsphase, die zweite in der Sterilisierungsphase und die dritte in der Abkühlphase befinden. Alle drei Phasen werden untenstehend getrennt beschrieben.

Die Aufwärmkammer 2 soll zunächst auf Betriebstemperatur gebracht werden, was man wie folgt erreicht: zuerst werden mit Hilfe von Elektromotoren 5 mit Untersetzergetriebe 6 beide Trenntüren 4 abgesenkt; danach wird die Kammer 2 aus dem hydrostatischen Gefäß 8 über eine Leitung 7 und durch Öffnung des Ventils 27 mit Wasser gefüllt. Infolge des hydrostatischen Drucks wird gleichzeitig auch das Aufwärmungshauptgefäß 18 gefüllt, in welchem eine geringere Luftmenge zum Druckausgleich unter der beispielsweise flexiblen Membranfeder zurückbleibt.

Dabei schließt der hydrostatische Druck, der durch Wirkung des erhöht angeordneten Gefäßes 8 verursacht wird beide Türen 4 hermetisch. Jetzt wird die Umlaufpumpe 17 eingeschaltet; Kesseldampf wird durch die Heizdampfdüse 11 zugeführt, so daß Wasser über das Rohr 20 tangential in die Kammer 2 eingeführt wird. Die gewünschte Temperatur wird mit Hilfe der üblichen Temperaturregelautomatik erhalten, welche die Dampfzufuhr über die Düse 11 steuert. Es kann nicht zur Wasserverdampfung kommen, weil das hydrostatische Gefäß 8 den Betriebsdruck bei Sättigungstemperatur an der Grenzlinie hält. Um mit der Sterilisierung die Mikroorganismen beispielsweise Clostridium Botulinum, zu vernichten, werden die Lebensmittel der Erhitzung bei Wassertemperaturen bis 120°C,. was einem Druck von 2 bar entspricht, unterworfen.

Die Vorkammer 1 wird gefüllt, nachdem die Aufnahmekammer 2 auf Betriebstemperatur (Sterilisierungstemperatur) gebracht wurde. Die Vorkammer 1 wird mittels eines in dieser angeordneten endlosen Horizontalförderers 23 mit der vorbereiteten Lebensmittelcharge 21 gefüllt, die Eingangstür 22 geschlossen. Die in dieser Vorbereitungskammer zurückgebliebene Luft wird allmählich mittels Wasser nach oben verdrängt und über das Entlüftungsventil 16 abgelassen. Das in die Vorkammer 1 strömende Wasser soll warm sein, damit später beim Öffnen der Trenntür 4 die Temperaturdifferenz zwischen den beiden Kammern umso niedriger ist. Dieses Warmwasser kommt aus dem Hilfsheizgefäß 10, welches vermittels der Dampfdüse 11 erwärmt wird. Es handelt sich bei der Erhitzung des Gefäßes 18 wie des Gefäßes 10 um Dampf, der aus ein und der gleichen Leitung abgezweigt wurde. Zum Schutz gegen hydraulische Stöße dient zum Druckausgleich in den Kammern 1 und 2 das Ausgleichsgefäß 15, das ebenfalls mit Wasser gefüllt ist; das Restluftkissen macht den hydraulischen Stoß gegen Ende des Füllvorgangs zunichte. Alles ist jetzt zur Übertragung der Lebensmittelcharge 21 in die nächste Phase, die Sterilisierungsphase in der Kammer 2, bereit.

Die erste Überführung der Lebensmittelcharge in die Phase der Sterilisierung wird ausgeführt, nachdem der Druckausgleich in den Kammern 1 und 2 ähnlich wie bei einem U-Boot hergestellt ist. Wird die erste Trenntür 4 mittels eines Elektromotors 5 mit Untersetzergetriebe 6 geöffnet, werden die Lebensmittel 21 durch beide Förderer 23 aus der Vorkammer 1 in die Aufwärmkammer 2 transportiert. Nach dieser Überfuhrung der Lebensmittelcharge 21 wird die erste Trenntür 4 geschlossen, hernach das Wasser aus der Vorkammer 1 vermittels des Ventils 28 abgelassen, vorher jedoch das Einlaufventil 26 geschlossen. Während der Entleerung kommuniziert das Entlüftungsventil 16 mit der Umgebungsluft und erleichtert die Wasserausströmung aus der Kammer 1. Nachdem die gesamte Wassermenge abgelaufen ist, kann die Eingangstür 22 wieder geöffnet werden, um mit einer weiteren Lebensmittelcharge neu beaufschlagt zu werden.

Die Lebensmittelsterilisierung erfolgt nun in der Heizkammer 2; die erforderliche Temperatur wird mittels der Dampfdüse 11 und der Umwälzpumpe 17 erhalten. Die entstehenden Luftkissen machen zusammen mit der Wirkung der flexiblen Feder, beispielsweise Membran, alle Druckschwankungen zunichte, die infolge des thermodynamischen Expansionsprozesses, der Kondensation, des Mischens, wenn der Dampf mit erhöhter Temperatur und Druck aus der Düse 11 ins Wasser mit niedrigerer Temperatur und Druck direkt einperlt, entstehen. Inzwischen erhält man einen konstanten Druck aufgrund des erhöht angeordneten hydrostatischen Gefäßes während des gesamten Prozesses. Der Höhenunterschied zwischen der Anordnung der beiden hydrostatischen Gefäße 8 und 12 beträgt etwa 1 m zugunsten des Gefäßes 8.

Die Füllung der Kammer 3 mit Wasser erfolgt, nachdem die erforderliche Sterilisierungszeit in der Aufwärmkammer 2 vergangen ist, wobei die Vorbereitungskammer 1 schon früher mit Lebensmitteln und warmem Wasser gefüllt wurde. Um Heißwasser in der Kammer 2 zu erhaltenen, wird die Kammer 3 zuerst mit Heißwasser aus dem Hilfsheizgefäß 10 über das Rohr 25 und Einlaufventil 26 gefüllt. Die Heißwasserfüllung oder der Druckausgleich in den Kammern 1 und 3 können während des kontinuierlich ablaufenden Prozesses durchgeführt werden.

Die zweite Überführung der eingedosten Lebensmittel erfolgt nach dem Druckausgleich in sämtlichen drei Kammern. Beide Trenntüren 4 öffnen gleichzeitig mittels des Elektromotors 5 mit Untersetzergetriebe 6. Gleiche horizontale Endlosförderer wie in der Kammer 1 sind auch in den Kammern 2 und 3 vorhanden. Sind beide Türen 4 geöffnet. so werden alle drei Förderer 23 eingeschaltet und die schon vorbereitete Lebensmittelcharge 21 tritt aus der Vorwärmkammer 1 in die Aufheizkammer 2 ein, die bereits sterilisierte Charge aus der Aufheizkammer 2 geht in die Kühlkammer 3. Ist die Überführung der Lebensmittel beendet, so werden beide Trenntüren 4 geschlossen. Dabei spielt das zweite Abgleichgefäß 15 mit Entlüftungsventil 16 die gleiche Rolle wie das Ab- oder Ausgleichsgefäß 15 beim Füllen der Vorkammer 1.

Die Abkühlung der unter Druck befindlichen Lebensmittelcharge in der Kammer 3 beginnt mit Öffnung des Einlaßventils für Kaltwasser 29, welches das Rückschlagventil 14 und das Ventil 27 durchströmt, wobei das Einlaßventil 26 dann zunächst geschlossen wird. Das Kühlwasser strömt weiter über das Rohr 13 ins zweite hydrostatische Gefäß 12, welches etwas niedriger, beispielsweise um einen 1 m, als das hydrostatische Gefäß 8 angeordnet ist.

Auf diese Weise erzielt man eine ganz geringe Druckdifferenz zwischen den Kammern 3 und 2 und sichert die Dichtung an der zweiten Trenntür 4. Man vermeidet so auch eine Vermischung des Heißwassers zur Sterilisierung mit dem Kühlwasser, wozu es sonst kommen könnte, wenn die zweite Tür 4 nicht hermetisch abgeschlossen wäre. Nun läuft Kaltwasser unter Druck weiter zu, dies wird durch das hydrostatische Gefäß 12 sichergestellt. Eine Wölbung der Lebensmittelgefäße, die immer noch warm sind und unter Druck stehen, wird verhindert. Am Druckgefäß 12 ist ein Überlauf vorhanden.

Wird die Temperatur in den Lebensmittelgefäßen allmählich gesenkt, so sinkt dadurch auch der Innendruck; die Abkühlung kann mit Hilfe des Strömungskühlwassers, ohne das andere hydrostatische Gefäß 12 fortgesetzt werden. Zu diesem Zweck wird das Auslaufventil 30 geöffnet, nachdem zunächst das Ventil 27 geschlossen würde.

Der Austrag der sterilisierten Lebensmittel wird durchgeführt, nachdem die notwendige Abkühlzeit abgelaufen ist. Dann schließt das Eingangskühlwasserventil 29; es öffnet das Auslaßventil 28, das zur Kühlkammer 3 gehört. Der Wasserablauf aus der Kammer 3 entspricht dem Wasserablauf aus der Vorkammer 1; das Entlüftungsventil 16 des anderen Ausgleichgefäßes 15 kommuniziert dann mit der Umgebungsluft und erleichtert so den Wasserablauf. Ist das Wasser aus der Kammer 3 völlig abgelaufen, kann man die Austragstür 24 öffnen; mit Hilfe des Förderers 23 wird die abgekühlte Lebensmittelcharge ausgetragen.

Der kontinuierliche Sterilisierungsprozeß wiederholt sich der Reihenfolge nach in der beschriebenen Weise. Bei Betriebsunterbrechung der gesamten Vorrichtung schließen alle Ventile 27; die Vorrichtung wird dann durch Öffnen aller Auslaufventile 28 entleert.

Die gleiche Vorrichtung läßt sich natürlich auch für Pasteurisierung anwenden, hierbei sind dann niedrigere Arbeitstemperaturen und Drucke anzuwenden.

Es sei noch erwähnt, daß das Wasser im Verlauf des kontinuierlichen Verfahrens in allen drei Kammern ständig ausgetauscht wird. Auf diese Weise wird der Sterilisierungsprozeß durch den Gebrauch des gleichen Wassers nicht gefährdet, das beim Lecken irgend eines der Lebensmittelgefäße oder auf andere Weise verseucht werden könnte.

Durch die Maßnahme nach der Erfindung werden Druckveränderungen während des Prozesses durch die erhöht (bis zu 20 m) angeordneten hydrostatischen Gefäße vermieden die immer den gleichen Druck in der kontinuierlichen Horizontalvorrichtung aufrecht erhalten. Es sind also nur drei Kammern mit endlos umlaufenden Förderern, gegeneinander durch Trenntüren getrennt, erforderlich, von denen die erste der Vorbereitung die zweite der Sterilisierung in Warmwasser unter Druck - Wasser erwärmt durch Wasserdampf - und die dritte zur Abkühlung in Kaltwasser unter Druck dient, wobei der Betriebsdruck durch erhöht angeordnete hydrostatische Kammern dauernd aufrecht erhalten wird.

Beim Verfahren nach der Erfindung, wo die eingedoste Lebensmittelcharge drei aufeinanderfolgende horizontale Bereiche durchläuft, wird der Betriebsdruck (des Wassers) gemäß der Dampfdruckkurve durch dauernd wirkenden konstanten hydrostatischen Druck auf die Bereiche gemäß der Dampfdruckkurve gehalten, was bei einem Druck von 2 bar einer Temperatur von 120°C etwa entspricht. Alle drei Phasen, nämlich Vorbereitung, Erhitzen und Kühlen laufen gleichzeitig ab.

## Patentansprüche

1. Vorrichtung zum kontinuierlichen Sterilisieren von in Behältern befindlichen Lebensmitteln, der horizontalen Bauart, mit Kammern für Erwärmen, Sterilisieren und Abkühlen, wobei die Kammern durch auf- und abfahrbare Trenntüren voneinander getrennt sind, gekennzeichnet durch Sicherung eines dauernd aufrechtzuerhaltenden konstanten Betriebsdrucks durch erhöht angeordnete hydrostatische Kammern (8; 12) und Durchführung des sterilisierenden Erwärmens ausschliesslich in unter Druck stehendem heißen Wasser.

2. Vorrichtung nach Anspruch 1, dadurch gekennzeichnet, daß die Trenntüren durch Elektromotoren (5) unter Untersetzergetriebe (6) jeweils schließbar ausgebildet sind.

3. Vorrichtung nach Anspruch 1, dadurch gekennzeichnet, daß die Aufwärmkammer (2) über eine Leitung (7) mit der Kammer (8) für erhöhten hydrostatischen Druck verbunden ist, welche ihrerseits über eine Leitung (9) mit dem Hilfserwärmungsgefäß (10), das mittels einer Dampfdüse erwärmt wird, verbunden ist.

4. Vorrichtung nach einem der vorhergehenden Ansprüche, dadurch gekennzeichnet, daß die Kühlkammer (3) mit einer zweiten hydrostatischen Kammer (12) über ein mit Rückschlagventil (14) versehenes Rohr verbunden ist.

5. Vorrichtung nach einem der vorhergehenden Ansprüche, dadurch gekennzeichnet, daß die Vor- und Kühlkammern (1) und (3) je mit einem Druckkompensationsgefäß (15) mit Entlüftungsventilen (16) versehen sind.

6. Vorrichtung nach einem der vorhergehenden Ansprüche, dadurch gekennzeichnet, daß die Aufwärmkammer (2) über eine Umlaufpumpe (17) mit dem Haupterwärmungsgefäß (18) in Verbindung steht, das mit einer flexiblen Membranfeder (19) versehen und über eine Dampfdüse (11) erhitzbar ist, derart, daß heißes Wasser über einen Eintrittsstutzen (20) tangential in die Sterilisationskammer (2) einläuft.

7. Vorrichtung nach einem der vorhergehenden Ansprüche, dadurch gekennzeichnet, daß der Weg der Lebensmittelcharge (21) durch eine Tür (22) geht auf einem Förderer (23) in die Aufwärmkammer (2) sowie die Kühlkammer (3) und die Vorrichtung über eine stirnseitige Ausgangstür (24) verläßt.

8. Vorrichtung nach einem der vorhergehenden Ansprüche, dadurch gekennzeichnet, daß der Weg des Heißwassers aus dem Hilfserhitzungsgefäß (10) des Anspruchs 2 unter Kommunizieren, über ein Rohr (25) und Einlaufventile (26) in die Kammern (1) und (3) verläuft.

9. Vorrichtung nach einem der vorhergehenden Ansprüche, dadurch gekennzeichnet, daß sämtliche Kammern (1; 2; 3) mit Ventilen (27) und Ablaufventilen (28) ausgestattet sind.

10. Vorrichtung nach Anspruch 1, dadurch gekennzeichnet, daß die Kühlkammer (3) mit Einlaufventil für das Kühlwasser (29) sowie mit Ablaufventil (30) versehen ist.

11. Vorrichtung nach Anspruch 1, dadurch gekennzeichnet, daß die hydrostatischen Kammern (8; 12) etwa 20 m über den horizontal hintereinander angeordneten Kammern (1; 2; 3) angeordnet sind und daß das die Kühlkammer (3) beaufschlagende Gefäß (12) niedriger, insbesondere 1 m niedriger als das die Kammern (1) und (3) beaufschlagende Gefäß (8) angeordnet ist.

## Claims

1. Apparatus for the continuous sterilization of foodstuffs disposed in containers of horizontal construction, having chambers for heating, sterilizing and cooling, the chambers being separated from each other by separating doors movable up and down, characterized by ensuring a constant operating pressure to be permanently maintained by elevatedly arranged hydrostatic chambers (8; 12) and carrying out the sterilizing heating solely in hot water under pressure.

2. Apparatus according to claim 1, characterized in that the separating doors are each made closable by electric motors (5) with reduction gearings (6).

3. Apparatus according to claim 1, characterized in that the heating chamber (2) is connected via a conduit (7) to the chamber (8) for elevated hydrostatic pressure which in turn is connected via a conduit (9) to the auxiliary heating vessel (10) which is heated by means of a steam nozzle.

4. Apparatus according to one of the preceding claims characterized in that the cooling chamber (3) is connected to a second hydrostatic chamber (12) via a tube provided with a check valve (14).

5. Apparatus according to one of the preceding claims characterized in that the preliminary chamber and cooling chamber (1) and (3) are each provided with a pressure-compensation vessel (15) having vent valves (16).

6. Apparatus according to one of the preceding claims characterized in that the heating chamber (2) communicates via a circulating pump (17) with the main heating vessel (18) which is provided with a flexible diaphragm spring (19) and is heatable via a steam nozzle (11) in such a manner that hot water enters via an inlet connecting tube piece (20) tangentially into the sterilization chamber (2).

7. Apparatus according to one of the preceding claims characterized in that the path of the foodstuff charge (21) passes through a door (22) on a conveyer (23) into the heating chamber (2) and the cooling chamber (3) and leaves the apparatus via an end-side exit door (24).

8. Apparatus according to one of the preceding claims characterized in that the path of the hot water runs from the auxiliary heating vessel (10) of claim 2 with communication via a tube (25) and inlet valves (26) into the chambers (1) and (3).

9. Apparatus according to one of the preceding claims characterized in that all the chambers (1; 2; 3) are equipped with valves (27) and discharge valves (28).

10. Apparatus according to claim 1 characterized in that the cooling chamber (3) is provided with an inlet valve for the cooling water (29) and a discharge valve (30).

11. Apparatus according to claim 1, characterized in that the hydrostatic chambers (8; 12) are arranged about 20 m above the chambers (1; 2; 3) arranged horizontally in series and the vessel (12) pressurizing the cooling chamber (3) is arranged on a lower level, particularly by 1 m lower than the vessel (8) acting on the chambers (1) and (3).

## Revendications

1. Dispositif pour la stérilisation en continu de denrées alimentaires placées dans des récipients, à mode de construction horizontal, comportant des chambres pour le chauffage, la stérilisation et le refroidissement, lesdites chambres étant séparées les unes des autres par des portes de séparation montantes et descendantes, caractérisé par la garantie d'une pression de service constante maintenue en permanence par la disposition en surélevation des chambres hydrostatiques (8;12) et l'exécution du chauffage stérilisateur exclusivement dans de l'eau chaude sous pression.

2. Dispositif selon la revendication 1, caractérisé par le fait que les portes de séparation peuvent être fermées par des moteurs électriques (5) munis d'engrenages réducteurs (6) respectivement.

3. Dispositif selon la revendication 1, caractérisé par le fait que la chambre de chauffage (2) est reliée par une conduite (7) á la chambre (8) de pression hydrostatique plus élevée, cette dernière étant reliée par une conduite (9) au récipient de chauffage d'appoint (10) réchauffé au moyen d'un gicleur de vapeur.

4. Dispositif selon l'une des revendications précédentes, caractérisé par le fait que la chambre de refroidissement (3) est reliée à une deuxième chambre hydrostatique (12) par un tube muni d'un clapet de non retour (14).

5. Dispositif selon l'une des revendications précédentes, caractérisé par le fait que les chambres préliminaires et de refroidissement (1) et (3) sont munies respectivement d'un récipient de détente (15) muni de soupapes de ventilation (16).

6. Dispositif selon l'une des revendication précédentes, caractérisé par le fait que la chambre de chauffage (2) est en liaison, par une pompe de circulation (17) avec un récipient (18) de chauffage principal qui est muni d'un ressort (19) à membrane et qui peut être chauffé par un gicleur à vapeur (11) de telle sorte que de l'eau chaude pénètre tangentiellement dans la chambre de stérilisation (2) en passant par un raccord d'admission (20).

7. Dispositif selon l'une des revendications précédentes, charactérisé par le fait que le trajet de la charge (21) de denrées alimentaires passe à travers une porte (22), sur un transporteur (23) pénétrant dans la chambre de chauffage (2) et la chambre de refroidissement (3), et quitte le dispositif en passant par une porte de sortie (24) placée du côte frontal.

8. Dispositif selon l'une des revendications précédentes, caractérisé par le fait que le trajet de l'eau chaude venant du récipient de chauffage d'appoint (10) mentionné à la revendication 3, passe par un tube (25) et des vannes d'admission (26) dans les chambres (1) et (3).

9. Dispositif selon l'une des revendications précédentes, caractérisé par le fait que toutes les chambres (1;2;3) sont munies de soupapes (27) et des vannes d'écoulement (28).

10. Dispositif selon la revendication 1, caractérisé par le fait que la chambre de refroidissemnet est munie d'une vanne d'admission pour l'eau froide (29) ainsi que d'une vanne d'écoulement (30).

11. Dispositif selon la revendication 1, caractérisé par le fait que les chambres hydrostatiques (8;12) sont disposées environ vingt mètres au-dessus des chambres (1;2;3) disposées horizontalement les unes derrière les autres, et que le récipient (12) relié à la chambre de refroidissement est disposé un mètre plus bas que le récipient (8) relié aux chambres (1) et (3).
